# EUROPEAN PATENT SPECIFICATION

(11) **EP 4 011 679 B1**
(45) Date of publication and mention of the grant of the patent: **18.12.2024**
(21) Application number: 20879374.5
(22) Date of filing: 24.08.2020
(51) Int. Cl.: B60L 7/10, B60W 30/18, B60L 15/20, B60W 10/02, B60W 10/06, B60K 6/485, B60L 50/10, B60L 7/18, B60L 1/08, B60W 50/00, B60K 6/20, B60W 20/15

(54) **ENERGY RECOVERY CONTROL METHOD AND DEVICE FOR VEHICLE**
VERFAHREN UND VORRICHTUNG ZUR ENERGIERÜCKGEWINNUNG FÜR EIN FAHRZEUG
PROCÉDÉ ET DISPOSITIF DE COMMANDE DE RÉCUPÉRATION D'ÉNERGIE POUR VÉHICULE

(30) Priority: 25.10.2019 CN 201911022151
(43) Date of publication of application: 15.06.2022
(73) Proprietor: Great Wall Motor Company Limited, Baoding, Hebei 071000 (CN)
(72) Inventor: WANG, Yinlei, Baoding, Hebei 071000 (CN); WU, Di, Baoding, Hebei 071000 (CN); LIU, Han, Baoding, Hebei 071000 (CN); DENG, Weifeng, Baoding, Hebei 071000 (CN); HOU, Wentao, Baoding, Hebei 071000 (CN); CHEN, Shujiang, Baoding, Hebei 071000 (CN); LIU, Xiu, Baoding, Hebei 071000 (CN)
(74) Representative: dompatent von Kreisler Selting Werner - Partnerschaft von Patent- und Rechtsanwälten mbB
(86) International application number: PCT/CN2020/110695
(87) International publication number: WO 2021/077885

(56) References cited:
- EP-A1- 1 911 650
- EP-A1- 2 927 073
- WO-A1-2014/073435
- WO-A1-2016/203452
- CN-A- 103 661 381
- CN-A- 103 661 381
- CN-A- 104 816 725
- CN-A- 105 599 635
- CN-A- 106 476 652
- CN-A- 107 199 893
- CN-A- 110 077 390
- CN-A- 110 239 507
- US-A1- 2002 116 099
- US-A1- 2016 272 187
- US-B2- 8 612 108

## Description

### CROSS REFERENCE TO RELATED APPLICATION

The present application claims priority to Chinese Patent Application No. 201911022151.6 filed on October 25, 2019.

### TECHNICAL FIELD

The disclosure relates to the technical field of vehicles, in particular to an energy recovery control method and device for a vehicle.

### BACKGROUND

At present, in the technical field of vehicles, due to the advantages of energy recovery in increasing the endurance mileage, more and more studies are blindly pursuing energy recovery as much as possible without affecting the driving experience. For example, for a 48V mild-hybrid vehicle, the use of BSG (Belt-driven Starter Generator) for energy recovery during braking or coasting can significantly increase the endurance mileage. However, taking the BSG as an example, current energy recovery scenarios are too simple. Generally, only the release of an accelerator pedal or the depression of a brake pedal is used as the activation condition of energy recovery. However, in some driving scenarios, such as when the vehicle is coasting by releasing the accelerator pedal at a high speed, the driver's braking intention is not strong, the deceleration provided by energy recovery is not required, and the energy recovery is performed blindly, so more energy is lost due to the losses of mechanical transmission and chemical conversion during energy conversion from kinetic energy to electrical energy. CN 110 239 507 A discloses an energy recovery control method for a hybrid vehicle, wherein the energy recovery control method comprises: determining whether the vehicle satisfies an activation condition for entering a preset high-speed coasting mode, wherein the high-speed coasting mode is used to show a working condition in which the speed of the vehicle is greater than or equal to a preset first speed threshold and the driver does not have an obvious braking requirement, and controlling the vehicle to perform an energy recovery cancellation operation when the vehicle enters the high-speed coasting mode.

### SUMMARY

In view of this, the present disclosure aims to provide an energy recovery control method for a vehicle to at least partially solve the above technical problems.

In order to achieve the above objective, the technical solution of the disclosure at least comprise the features of claim 1. According to the present invention it is implemented as follows:

An energy recovery control method for a vehicle includes: determining whether the vehicle satisfies an activation condition for entering a preset high-speed coasting mode, the high-speed coasting mode being used to show a working condition in which the speed of the vehicle is greater than or equal to a preset first speed threshold and the driver does not have an obvious braking requirement; and controlling the vehicle to perform an energy recovery cancellation operation when the vehicle enters the high-speed coasting mode.

Further, the activation condition is configured to include the following: the speed of the vehicle is greater than or equal to the preset first speed threshold; an accelerator pedal opening of the vehicle is less than or equal to a preset opening threshold; a brake pedal of the vehicle is in a non-depressed state; and a cooling mechanism of the vehicle is in a state that an engine does not need to be kept starting.

Further, the activation condition further includes any one or more of the following: the current driving mode of the vehicle is an economical driving mode; and the vehicle currently has not received an engine stop prohibition instruction or engine failure information.

Further, the controlling the vehicle to perform an energy recovery cancellation operation includes: controlling a clutch of the vehicle to open; and controlling the engine of the vehicle to cut off fuel and stop.

Further, the energy recovery control method further includes: for the vehicle in the high-speed coasting mode, determining whether the vehicle satisfies an exit condition for exiting the high-speed coasting mode; and, controlling the vehicle to perform an energy recovery operation or a normal driving operation when the vehicle satisfies the exit condition and exits the high-speed coasting mode.

Further, the exit condition includes any one of the following:
a first exit condition, configured to include: the speed of the vehicle is less than a preset second speed threshold;
a second exit condition, configured to include: the accelerator pedal opening of the vehicle is less than or equal to the preset opening threshold and the brake pedal of the vehicle is in a depressed state;
a third exit condition, configured to include: the accelerator pedal opening of the vehicle is greater than the preset opening threshold and the brake pedal of the vehicle is in the non-depressed state;
a fourth exit condition, configured to include: the speed of the vehicle is less than the preset second speed threshold, and the accelerator pedal opening of the vehicle is less than or equal to the preset opening threshold and/or the brake pedal of the vehicle is in the non-depressed state, the second speed threshold being less than the first speed threshold;
a fifth exit condition, configured to include: the vehicle currently has received the engine stop prohibition instruction or engine failure information; and
a sixth exit condition, configured to include: the cooling mechanism of the vehicle is in the state that the engine does not need to be kept starting.

Further, the controlling the vehicle to perform an energy recovery operation or a normal driving operation includes: controlling the vehicle to perform the energy recovery operation when the vehicle satisfies the first exit condition and the second exit condition; and controlling the vehicle to perform the normal driving operation when the vehicle satisfies the third exit condition.

Further, the controlling the vehicle to perform the energy recovery operation includes: for the vehicle with a BSG, requesting the BSG to start through a hybrid vehicle control unit (HCU), controlling an engine speed of the vehicle to increase to achieve a target speed range for implementing clutch engagement, controlling the engine to be in a fuel cut-off state during the speed increase process, and entering the energy recovery process of the BSG after the clutch engagement is completed; and/or the controlling the vehicle to perform the normal driving operation includes: for the vehicle with the BSG, requesting the BSG to start through the HCU, starting the engine to start fuel injection, controlling the engine speed to increase to achieve the target speed range for implementing clutch engagement, and entering the normal driving process of the BSG after the clutch engagement is completed.

Compared with the prior art, the energy recovery method for a vehicle according to the disclosure has the following advantages: energy recovery management can be considered from the perspective of driver's driving intention; and in the high-speed coasting mode, it is recognized that that the driver currently does not have a strong braking intention, and energy recovery is cancelled, thereby reducing fuel consumption, achieving better driver intention recognition, and improving vehicle coasting comfort.

Another objective of the disclosure is to provide an energy recovery control device for a vehicle to at least partially solve the above technical problems.

In order to achieve the above objective, the technical solution of the disclosure is implemented as follows:
An energy recovery control device for a vehicle includes a controller, the controller executing the above-mentioned energy recovery control method.

An energy recovery control device for a vehicle includes: one or more processors; a memory for storing one or more programs, the one or more programs, when executed by the one or more processors, causing the one or more processors to implement the energy recovery control method as described above.

Another objective of the disclosure is to provide a machine-readable storage medium and a processor to at least partially solve the above technical problems.

In order to achieve the above objective, the technical solution of the disclosure is implemented as follows:
A machine-readable storage medium stores instructions that cause a machine to execute the above-mentioned energy recovery control method.

A processor for running a program, when the program is run, the energy recovery control method as described above is executed.

The energy recovery control device for a vehicle, the machine-readable storage medium and the processor have the same advantages as the above-mentioned energy recovery control method for a vehicle over the prior art, which will not be repeated here.

Other features and advantages of the disclosure will be described in detail in specific embodiments below.

### BRIEF DESCRIPTION OF THE FIGURES

The accompanying drawings constituting a part of the disclosure are used for providing a further understanding of the disclosure, and the schematic embodiments of the disclosure and the descriptions thereof are used for interpreting the disclosure, rather than constituting improper limitations to the disclosure. In the drawings:
FIG. 1 is a flowchart of an energy recovery control method for a vehicle according to an example of the disclosure; and
FIG. 2 is a flowchart of vehicle control according to different exit conditions according to an example of the disclosure.

### DETAILED DESCRIPTION

It should be noted that the embodiments of the disclosure and the features of the embodiments may be combined with each other without conflict.

The disclosure will be described in detail below with reference to the accompanying drawings and in conjunction with examples.

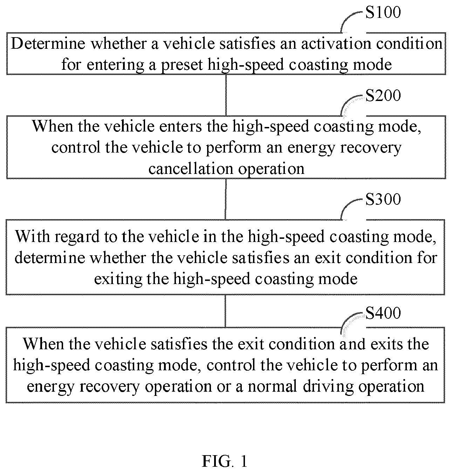

FIG. 1 is a schematic flowchart of an energy recovery control method for a vehicle according to an example of the disclosure. As shown in FIG. 1, the energy recovery control method may include the following steps:
Step S100, whether the vehicle satisfies an activation condition for entering a preset high-speed coasting mode is determined.

The high-speed coasting mode is used to show a working condition in which the speed of the vehicle is greater than or equal to a preset first speed threshold and the driver does not have an obvious braking requirement. For example, when the speed of the vehicle is greater than or equal to 52 km/h, it is determined that the vehicle is in a high-speed state, and the driver does not brake, but just releases an accelerator pedal, which indicates that the driver may have no obvious braking requirement, and the corresponding working condition can be set as the high-speed coasting mode. In the high-speed coasting mode, energy recovery is not suitable.

According to the invention, the activation condition for the high-speed coasting mode in this example of the disclosure is configured to include the following four:
1) The speed of the vehicle is greater than or equal to the preset first speed threshold.
   The first speed threshold is a value To Be Determined (TBD). For example, the first speed threshold may be 52 km/h, and once the speed of the vehicle reaches or exceeds 52 km/h, it may be considered that the vehicle is in a high-speed state.
2) An accelerator pedal opening of the vehicle is less than or equal to a preset opening threshold.
   The opening threshold is also TBD, and preferably a smaller value, such as 5% of the maximum opening. When the accelerator pedal opening is less than or equal to 5%, it may be considered that the driver has loosened or released the accelerator pedal.
3) A brake pedal of the vehicle is in a non-depressed state.
   The brake pedal being in a non-depressed state indicates that the driver does not have a braking intention.
4) A cooling mechanism of the vehicle is in a state that an engine does not need to be kept starting.

It should be noted that the engine needs to be kept starting to realize the cooling function on the vehicle, and the high-speed coasting mode in the example of the disclosure requires that the engine is not started. Therefore, it is necessary to determine whether the cooling mechanism (mainly an air conditioner) of the vehicle is in a state that the engine does not need to be kept starting. For example, when the air conditioner is not turned on or the difference between the set temperature and the ambient temperature after the air conditioner is turned on is less than a preset lower temperature (for example, 7°C), it can be determined that the cooling mechanism is in the state that the engine does not need to be kept starting.

By detecting the above four conditions, the accuracy of determining whether the vehicle has entered the preset high-speed coasting mode can be ensured. However, there are also some special working conditions in actual driving, for example, the engine of the vehicle fails or the vehicle is in a driving mode that the engine needs to be started. In this regard, in a more preferred example, in addition to the above four conditions, the activation condition further includes any one or more of the following:

5) The current driving mode of the vehicle is an economical driving mode (Ecology, Conservation and Optimization, abbreviated as ECO).

When the vehicle is in the ECO mode, the engine usually does not need to be started. When the vehicle is in other driving modes other than the ECO mode, such as a sports driving mode, the engine usually needs to maintain a certain speed to improve the dynamic response capability of the vehicle.

6) The vehicle currently has not received an engine stop prohibition instruction or engine failure information.

It should be noted that the condition 6) usually does not occur and is mainly for the scenario where the vehicle encounters an accident and breaks down.

Step S200, the vehicle is controlled to perform an energy recovery cancellation operation when the vehicle enters the high-speed coasting mode.

The example of the disclosure sets a high-speed coasting mode in which the driver does not have an obvious braking requirement and energy recovery is not required. Then in step S200, when the vehicle enters the high-speed coasting mode, the vehicle is controlled to perform an energy recovery cancellation operation, to avoid energy loss caused by blindly entering the energy recovery process. More energy is lost mainly due to the losses of mechanical transmission and chemical conversion during energy conversion from kinetic energy to electrical energy.

Further, controlling the vehicle to perform an energy recovery cancellation operation in step S200 may include: a clutch of the vehicle is controlled to open; and the engine of the vehicle is controlled to cut off fuel and stop.

Here, the engine is disconnected from a drive system by opening the clutch, that is, a power system is disconnected, which is beneficial to reducing the mechanical loss of the power system. In addition, the operation of stopping fuel injection is beneficial to reducing fuel consumption.

Accordingly, the energy recovery control method for a vehicle according to the example of the disclosure considers energy recovery management from the perspective of driver's driving intention, and in the high-speed coasting mode, it is recognized that the current driver does not have a strong braking intention, thereby achieving better driving intention recognition; operations such as canceling energy recovery (and/or opening the clutch, and cutting off engine oil) are performed to reduce the load, thereby reducing fuel consumption; and the vehicle is kept in a coasting state to improve vehicle coasting comfort.

In an example, the energy recovery control method for a vehicle according to the example of the disclosure further includes step S300 and step S400 as follows.

Step S300, for the vehicle in the high-speed coasting mode, whether the vehicle satisfies an exit condition for exiting the high-speed coasting mode is determined.

Once the vehicle no longer meets the requirements of the high-speed coasting mode, it should be considered to restore the energy recovery function to further improve the endurance mileage. Accordingly, the example of the disclosure further sets the exit condition for determining whether the vehicle exits the high-speed coasting mode.

Preferably, according to the running situation of the vehicle, the exit condition may be any one of the following three condition:
1) A first exit condition, configured to include: the speed of the vehicle is less than a preset second speed threshold.
2) A second exit condition, configured to include: the accelerator pedal opening of the vehicle is less than or equal to the preset opening threshold and the brake pedal of the vehicle is in a depressed state.
3) A third exit condition, configured to include: the accelerator pedal opening of the vehicle is greater than the preset opening threshold and the brake pedal of the vehicle is in the non-depressed state.
4) A fourth exit condition, configured to include: the speed of the vehicle is less than the preset second speed threshold, and the accelerator pedal opening of the vehicle is less than or equal to the preset opening threshold and/or the brake pedal of the vehicle is in the non-depressed state, the second speed threshold being less than the first speed threshold. On the basis of the first exit condition, two determination conditions regarding the accelerator pedal opening and the depression state of the brake pedal are added to the fourth exit condition.
5) A fifth exit condition, configured to include: the vehicle currently has received the engine stop prohibition instruction or engine failure information.
6) A sixth exit condition, configured to include: the cooling mechanism of the vehicle is in the state that the engine does not need to be kept starting.

The first speed threshold is, for example, 52 km/h. The second speed threshold is, for example, 42 km/h. The opening threshold is, for example, 5% of the full opening of the accelerator pedal. All of the thresholds are TBD. The fifth exit condition and the sixth exit condition correspond to the activation conditions 4) and 6) mentioned above.

According to different exit conditions, the vehicle control strategy for exiting the high-speed coasting mode may be different, which will be described in detail below.

Step S400, the vehicle is controlled to perform an energy recovery operation or a normal driving operation when the vehicle satisfies the exit condition and exits the high-speed coasting mode.

It can be seen that the accelerator pedal is in a released state with an opening less than or equal to the preset opening threshold in both the first exit condition and the second exit condition, while the accelerator pedal is in a depressed state with an opening greater than the opening threshold in the third exit condition, so it can be inferred that when the third exit condition is satisfied, the driver has an acceleration intention. The acceleration process needs to meet normal operation of normal driving, so the energy recovery is not suitable.

Therefore, the vehicle is controlled to perform the energy recovery operation when the vehicle satisfies the first exit condition and the second exit condition, and the vehicle is controlled to perform the normal driving operation when the vehicle satisfies the third exit condition.

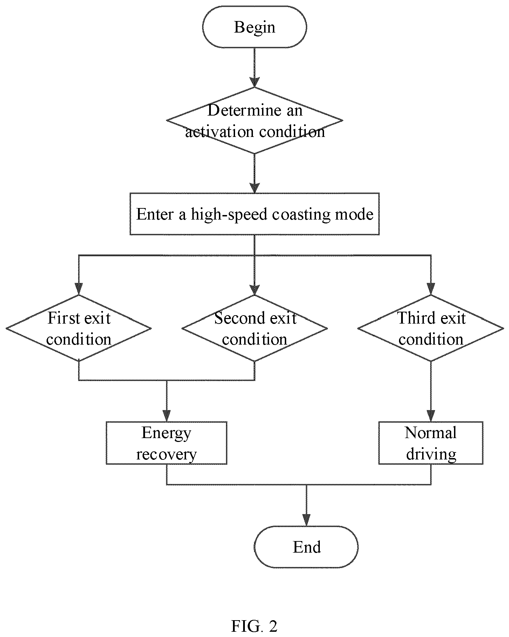

Specifically, taking the vehicle with a BSG as an example, FIG. 2 is a schematic flowchart of vehicle control according to different exit conditions according to an example of the disclosure.

As shown in FIG. 2, for the first exit condition, it indicates that both the brake pedal and the accelerator pedal are in a released state, so the operation of controlling the vehicle to perform the energy recovery includes: the BSG is requested to start through a Hybrid Vehicle Control Unit (HCU), an engine speed of the vehicle is controlled to increase to achieve a target speed range for implementing clutch engagement, the engine is controlled to be in a fuel cut-off state during the speed increase process, and the energy recovery process of the BSG is entered after the clutch engagement is completed.

For example, the controlling an engine speed of the vehicle to increase to achieve a target speed range for implementing clutch engagement includes: the engine speed is controlled to increase to a requested speed of a TCU (Transmission Control Unit), and when the speed reaches within 100n from the target speed, the clutch is engaged to enter the energy recovery process of the BSG. Where n represents a preset speed, which is TBD.

Further, for example, the clutch being engaged to enter the energy recovery process of the BSG may include: the clutch first starts to slip and engage, then synchronizes through torque transmission, and finally fully engages; and after the clutch engagement is completed, the kinetic energy generated by the coasting of the vehicle is transmitted to the BSG through the vehicle-front axle-clutch-engine-BSG, and the energy recovery process of the BSG is entered.

With regard to the second exit condition, it indicates that the accelerator pedal is always in a released state and the brake pedal is depressed, the controlling the vehicle to perform the energy recovery operation is similar to that of the first exit condition, so details are not described herein again. It should be noted that when the vehicle is in the high-speed coasting mode, if a series of operations such as opening the clutch and cutting off engine oil are performed while the energy recovery is canceled, the losses of energy conversion and kinetic energy can be reduced after exiting the high-speed coasting mode, and the endurance mileage can be quickly increased by energy recovery.

With regard to the third exit condition, it indicates that the brake pedal is always in a released state and the accelerator pedal is depressed, the controlling the vehicle to perform the normal driving operation may include: the BSG is requested to start through the HCU, the engine is started to start fuel injection, the engine speed is controlled to increase to achieve the target speed range for implementing clutch engagement, and the normal driving process of the BSG is entered after the clutch engagement is completed. The process of clutch engagement is similar to the situations corresponding to the first exit condition and the second exit condition, but after the clutch engagement is completed, the kinetic energy generated by the engine is transmitted through the engine-clutch-front axle-vehicle, and then the normal driving process is entered.

To sum up, the energy recovery control method for a vehicle according to the example of the disclosure not only defines the high-speed coasting mode for canceling the energy recovery, but also restores the energy recovery function of the vehicle after it is recognized that the vehicle exits the high-speed coasting mode, thereby increasing the endurance mileage.

According to the invention there is provided an energy recovery control device for a vehicle. The energy recovery control device includes a controller, and the controller executes the energy recovery control method described in the above example. The controller may be, for example, an HCU, which may be used to run a program, and when the program is run, the energy recovery control method described in the above example is executed.

According to the invention there is provided an energy recovery control device for a vehicle, including: one or more processors; and a memory for storing one or more programs, the one or more programs, when executed by the one or more processors, causing the one or more processors to implement the energy recovery control method according to any one of claims 1 to 6.

According to the invention there is provided a machine-readable storage medium, storing instructions that cause a machine to execute the energy recovery control method described in the above example.

An example of the disclosure further provides a processor for running a program, and when the program is run, the energy recovery control method described in the above example is executed. An example of the disclosure further provides a computer program product, which, when executed on a vehicle-related component, is adapted to execute a program initialized with the following method steps: the energy recovery control method described in the above example.

It should be appreciated by those skilled in the art that the examples of the disclosure may be provided as a method, an apparatus or a computer program product. Therefore, the disclosure may be in the form of a full hardware example, a full software example, or an example combining software and hardware. In addition, the disclosure may be in the form of a computer program product implemented on one or more computer available storage media (including but not limited to a disk memory, a CD-ROM, an optical memory, etc.) including computer available program codes.

The disclosure is described with reference to flowcharts and/or block diagrams of the method, equipment (system), and the computer program product in the examples of the disclosure. It should be understood that computer program instructions can implement each process and/or block in the flowcharts and/or block diagrams and a combination of processes and/or blocks in the flowcharts and/or block diagrams. These computer program instructions may be provided to a general-purpose computer, a dedicated computer, an embedded processor, or a processor of other programmable data processing device to generate a machine, so that a device configured to implement functions specified in one or more processes in the flowcharts and/or one or more blocks in the block diagrams is generated by using instructions executed by the general-purpose computer or the processor of other programmable data processing device.

These computer program instructions can also be stored in a computer-readable memory that can guide a computer or other programmable data processing device to work in a specific manner, so that the instructions stored in the computer-readable memory generate a product including an instruction device, where the instruction device implements functions specified in one or more processes in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more processes in the flowcharts and/or one or more blocks in the block diagrams.

In a typical configuration, the computing device includes one or more central processing units (CPUs), an input/output interface, a network interface, and a memory.

The memory may be in the form of a volatile memory, a random access memory (RAM) and/or a non-volatile memory, such as a read-only memory (ROM) or a flash RAM, in a computer-readable medium. The memory is an example of the computer-readable medium.

The computer-readable medium, including permanent and non-permanent, mobile and immobile media, can store information by any method or technology. The information can be computer-readable instructions, data structures, modules of programs or other data. Examples of the computer storage medium include, but are not limited to, a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a read-only disk read-only memory (CD-ROM), a digital versatile disc (DVD) or other optical storage, a magnetic cartridge tape, a tape disk storage or other magnetic storage device or any other non-transportable media, which can be used to store information that can be accessed by a computing device.

It should also be noted that the terms "include" or any variants thereof are intended to cover a non-exclusive inclusion. As such, a process, method, commodity, or device including a series of elements not only includes these elements, but further includes other elements not definitely listed, or can include inherent elements of the process, method, commodity, or device. In the absence of more limitations, an element limited by "include a..." does not exclude other same elements existing in the process, method, commodity, or device including the element.

## Claims

1. An energy recovery control method for a hybrid vehicle, wherein the energy recovery control method comprises:
determining whether the vehicle satisfies an activation condition for entering a preset high-speed coasting mode, (S100) wherein the high-speed coasting mode is used to show a working condition in which the speed of the vehicle is greater than or equal to a preset first speed threshold and the driver does not have an obvious braking requirement, wherein an obvious braking requirement is when the vehicle is in a high-speed state, and the driver does not brake, but just releases an accelerator pedal; and
controlling the vehicle to perform an energy recovery cancellation operation when the vehicle enters the high-speed coasting mode, (S200) wherein
the activation condition is configured to comprise the following:
the speed of the vehicle is greater than or equal to the first speed threshold;
an accelerator pedal opening of the vehicle is less than or equal to a preset opening threshold;
a brake pedal of the vehicle is in a non-depressed state; and **characterized in that** the activation condition is configured to further comprise:
a cooling mechanism of the vehicle is in a state that an engine of the vehicle does not need to be kept starting, which is when the air conditioner comprised in the cooling mechanism is not turned on or the difference between the set temperature and the ambient temperature after the air conditioner is turned on is less than a preset lower temperature,
wherein the activation condition further comprises any one or more of the following:
the current driving mode of the vehicle is an economical driving mode; and
the vehicle currently has not received an engine stop prohibition instruction or engine failure information for the engine of the vehicle.

2. The energy recovery control method for a vehicle according to claim 1, wherein the controlling the vehicle to perform an energy recovery cancellation operation comprises:
controlling a clutch of the vehicle to open so that the engine of the vehicle is disconnected from a drive system of the vehicle; and
controlling the engine of the vehicle to cut off fuel and stop.

3. The energy recovery control method for a vehicle according to claim 1, wherein the energy recovery control method further comprises:
for the vehicle in the high-speed coasting mode, determining whether the vehicle satisfies an exit condition for exiting the high-speed coasting mode; (S300) and
controlling the vehicle to perform an energy recovery operation or a normal driving operation when the vehicle satisfies the exit condition and exits the high-speed coasting mode (S400).

4. The energy recovery control method for a vehicle according to claim 3, wherein the exit condition comprises any one of the following:
a first exit condition, configured to comprise: the speed of the vehicle is less than a preset second speed threshold, wherein the second speed threshold is less than the first speed threshold;
a second exit condition, configured to comprise: the accelerator pedal opening of the vehicle is less than or equal to the preset opening threshold and the brake pedal of the vehicle is in a depressed state;
a third exit condition, configured to comprise: the accelerator pedal opening of the vehicle is greater than the preset opening threshold and the brake pedal of the vehicle is in the non-depressed state;
a fourth exit condition, configured to comprise: the speed of the vehicle is less than the preset second speed threshold, and the accelerator pedal opening of the vehicle is less than or equal to the preset opening threshold and/or the brake pedal of the vehicle is in the non-depressed state, wherein the second speed threshold is less than the first speed threshold;
a fifth exit condition, configured to comprise: the vehicle currently has received the engine stop prohibition instruction or engine failure information; and a sixth exit condition, configured to comprise: the cooling mechanism of the vehicle is in the state that the engine does not need to be kept starting.

5. The energy recovery control method for a vehicle according to claim 4, wherein the controlling the vehicle to perform an energy recovery operation or a normal driving operation comprises:
controlling the vehicle to perform the energy recovery operation when the vehicle satisfies the first exit condition and the second exit condition; and
controlling the vehicle to perform the normal driving operation when the vehicle satisfies the third exit condition.

6. The energy recovery control method for a vehicle according to claim 3, wherein the vehicle comprises a Belt-driven Starter Generator (BSG) and a hybrid vehicle control unit (HCU); and
the controlling the vehicle to perform the energy recovery operation comprises:
for the vehicle with the Belt-driven Starter Generator (BSG), requesting the BSG to start through the hybrid vehicle control unit (HCU), controlling an engine speed of the vehicle to increase to achieve a target speed range for implementing clutch engagement, controlling the engine to be in a fuel cut-off state during the speed increase process, and entering the energy recovery process of the BSG after the clutch engagement is completed; and/or
the controlling the vehicle to perform the normal driving operation comprises:
for the vehicle with the BSG, requesting the BSG to start through the HCU, starting the engine to start fuel injection, controlling the engine speed to increase to achieve the target speed range for implementing clutch engagement, and entering the normal driving process of the BSG after the clutch engagement is completed.

7. An energy recovery control device for a hybrid vehicle, wherein the energy recovery control device comprises:
one or more processors; and
a storage device for storing one or more programs,
wherein the one or more programs, when executed by the one or more processors, cause the one or more processors to implement the energy recovery control method according to any one of claims 1 to 6.

8. Energy recovery control device according to claim 7, wherein the storage device is a machine-readable storage medium, storing instructions that cause a machine to execute the energy recovery control method according to any one of claims 1 to 6.

9. Energy recovery control device according to claim 7 or 8, wherein the one or more processors are each a processor for running a program, wherein when the program is run, the energy recovery control method according to any one of claims 1 to 6 is executed.

## Patentansprüche

1. Energierückgewinnungssteuerverfahren für ein Hybrid-Fahrzeug, wobei das Energierückgewinnungsverfahren die folgenden Schritte aufweist:
Feststellen, ob das Fahrzeug eine Aktivierungsbedingung für den Eintritt in einen voreingestellten Hochgeschwindigkeitsleerlaufmodus erfüllt, (S100),
wobei der Hochgeschwindigkeitsleerlaufmodus verwendet wird, um einen Betriebszustand darzustellen, in welchem die Geschwindigkeit des Fahrzeugs höher als oder gleich einem ersten voreingestellten Geschwindigkeitsschwellenwert ist und der Fahrer keinen offensichtlichen Bremsbedarf hat, wobei ein offensichtlicher Bremsbedarf besteht, wenn sich das Fahrzeug in einem Hochgeschwindigkeitszustand befindet und der Fahrer nicht bremst, sondern lediglich ein Gaspedal loslässt; und
Steuern des Fahrzeugs, um eine Energierückgewinnungsbeendigungsoperation durchzuführen, wenn das Fahrzeug in den Hochgeschwindigkeitsleerlaufmodus eintritt, (S200),
wobei die Aktivierungsbedingung derart ausgebildet ist, dass sie Folgendes aufweist:
die Geschwindigkeit des Fahrzeugs ist höher als oder gleich dem ersten Geschwindigkeitsschwellenwert;
ein Gaspedalhub des Fahrzeugs ist geringer als oder gleich einem voreingestellten Hubschwellenwert;
ein Bremspedal des Fahrzeug ist in einem nicht betätigten Zustand; und
**dadurch gekennzeichnet, dass** die Aktivierungsbedingung derart ausgebildet ist, ferner aufzuweisen:
ein Kühlmechanismus des Fahrzeugs befindet sich in einem Zustand, in dem ein Motor des Fahrzeugs nicht weiter gestartet werden muss, wie es der Fall ist, wenn eine in dem Kühlmechanismus enthaltene Klimaanlage nicht eingeschaltete ist oder die Differenz zwischen der Solltemperatur und der Umgebungstemperatur nach dem Einschalten der Klimaanlage geringer als eine voreingestellte niedrigere Temperatur ist;
wobei die Aktivierungsbedingung ferner Folgendes aufweist:
der aktuelle Fahrmodus des Fahrzeugs ist ein wirtschaftlicher Fahrmodus ist; und/oder
das Fahrzeug gegenwärtig keinen Motorstoppverbotsbefehl oder keine Motorausfallinformationen zu dem Motor des Fahrzeugs empfangen hat.

2. Energierückgewinnungssteuerverfahren für ein Fahrzeug nach Anspruch 1, bei welchem das Steuern des Fahrzeugs, um eine Energierückgewinnungsbeendigungsoperation durchzuführen, die folgenden Schritte aufweist:
Steuern einer Kupplung des Fahrzeugs zum Öffnen derselben, so dass der Motor des Fahrzeugs von einem Antriebssystem des Fahrzeugs getrennt wird; und
Steuern des Motors des Fahrzeugs, um die Treibstoffzufuhr zu unterbrechen und den Motor anzuhalten.

3. Energierückgewinnungssteuerverfahren für ein Fahrzeug nach Anspruch 1, bei welchem das Energierückgewinnungssteuerverfahren ferner die folgenden Schritte aufweist:
bei in dem Hochgeschwindigkeitsleerlaufmodus befindlichem Fahrzeug, Feststellen, ob eine Austrittsbedingung für das Verlassen des Hochgeschwindigkeitsleerlaufmodus erfüllt, (S300); und
Steuern des Fahrzeugs, um eine Energierückgewinnungsoperation oder eine normale Fahroperation durchzuführen, wenn das Fahrzeug die Austrittsbedingung erfüllt und den Hochgeschwindigkeitsleerlaufmodus verlässt (S400).

4. Energierückgewinnungssteuerverfahren für ein Fahrzeug nach Anspruch 3, bei welchem die Austrittsbedingung einen der folgenden Schritte aufweist:
eine erste Austrittsbedingung, die derart ausgebildet ist, dass sie aufweist: die Geschwindigkeit des Fahrzeugs ist geringer als ein voreingestellter zweiter Geschwindigkeitsschwellenwert, wobei der zweite Geschwindigkeitsschwellenwert geringer als der erste Geschwindigkeitsschwellenwert ist;
eine zweite Austrittsbedingung, die derart ausgebildet ist, dass sie aufweist: der Gaspedalhub des Fahrzeugs ist geringer als oder gleich dem voreingestellten Hubschwellenwert und das Bremspedal des Fahrzeugs befindet sich in einem betätigten Zustand;
eine dritte Austrittsbedingung, die derart ausgebildet ist, dass sie aufweist: der Gaspedalhub des Fahrzeugs ist größer als der voreingestellte Hubschwellenwert und das Bremspedal des Fahrzeugs befindet sich in dem nicht betätigten Zustand;
eine vierte Austrittsbedingung, die derart ausgebildet ist, dass sie aufweist: die Geschwindigkeit des Fahrzeugs ist geringer als der voreingestellte zweite Geschwindigkeitsschwellenwert ist, und der Gaspedalhub des Fahrzeugs geringer als oder gleich dem voreingestellten Hubschwellenwert ist und/oder das Bremspedal des Fahrzeugs befindet sich in dem nicht betätigten Zustand, wobei der zweite Geschwindigkeitsschwellenwert geringer als der erste Geschwindigkeitsschwellenwert ist;
eine fünfte Austrittsbedingung, die derart ausgebildet ist, dass sie aufweist: das Fahrzeug hat aktuelle den Motorstoppverbotsbefehls oder Motorausfallinformationen empfangen, und
eine sechste Austrittsbedingung, die derart ausgebildet ist, dass sie aufweist: der Kühlmechanismus des Fahrzeugs befindet sich in dem Zustand, in dem der Motor nicht weiter gestartet werden muss.

5. Energierückgewinnungssteuerverfahren für ein Fahrzeug nach Anspruch 4, bei welchem das Steuern des Fahrzeugs, um eine Energierückgewinnungsoperation oder eine normale Fahroperation durchzuführen, die folgenden Schritte aufweist:
Steuern des Fahrzeugs, um eine Energierückgewinnungsoperation durchzuführen, wenn das Fahrzeug die erste Austrittsbedingung und die zweite Austrittsbedingung erfüllt; und
Steuern des Fahrzeugs, um die normale Fahroperation durchzuführen, wenn das Fahrzeug die dritte Austrittsbedingung erfüllt.

6. Energierückgewinnungssteuerverfahren für ein Fahrzeug nach Anspruch 3, bei welchem das Fahrzeug einen riemengetriebenen Startergenerator (BSG) und eine Hybrid-Fahrzeug-Steuereinheit (HCU) aufweist; und
wobei das Steuern des Fahrzeugs, um eine Energierückgewinnungsoperation durchzuführen, die folgenden Schritte aufweist:
bei einem Fahrzeug mit riemengetriebenem Startergenerator (BSG), Anfordern des Startens des BSG durch die Hybrid-Fahrzeug-Steuereinheit (HCU), Steuern der Motordrehzahl des Fahrzeugs derart, dass diese ansteigt, um einen Ziel-Drehmomentbereich für das Implementieren des Einrückens der Kupplung zu erreichen, Steuern des Motors derart, dass er sich während des Drehzahlerhöhungsvorgangs in einem Treibstoffzufuhrunterbrechungszustand befindet, und Eintreten in den Energierückgewinnungsvorgang des BSG nach Abschluss des Einrückens der Kupplung; und/oder
das Steuern des Fahrzeugs, um die normale Fahroperation durchzuführen, die folgenden Schritte aufweist:
bei dem Fahrzeug mit dem BSG, Anfordern des Startens des BSG durch die HCU, Starten des Motors um die Treibstoffeinspritzung zu beginnen, Steuern der Motordrehzahl des Fahrzeugs derart, dass diese ansteigt, um einen Ziel-Drehmomentbereich für das Implementieren des Einrückens der Kupplung zu erreichen, und Eintreten in den Energierückgewinnungsvorgang des BSG nach Abschluss des Einrückens der Kupplung.

7. Energierückgewinnungssteuervorrichtung für ein Hybrid-Fahrzeug, bei welcher die Energierückgewinnungssteuervorrichtung aufweist:
einen oder mehrere Prozessoren; und
eine Speichervorrichtung zum Speichern eines oder mehrerer Programme,
wobei das eine oder die mehreren Programme bei Ausführung durch den einen oder die mehreren Prozessoren den einen oder die mehreren Prozessoren veranlassen, das Energierückgewinnungssteuerverfahren nach einem der Ansprüche 1 bis 6 zu implementieren.

8. Energierückgewinnungssteuervorrichtung nach Anspruch 7, bei welcher die Speichervorrichtung ein maschinenlesbares Speichermedium ist, das Befehle speichert, welche eine Maschine veranlasst, das Energierückgewinnungssteuerverfahren nach einem der Ansprüche 1 bis 6 auszuführen.

9. Energierückgewinnungssteuervorrichtung nach Anspruch 7 oder 8, bei welcher der eine oder die mehreren Prozessoren jeweils ein Prozessor zum Ausführen eines Programms sind, wobei bei Ausführung des Programms das Energierückgewinnungssteuerverfahren nach einem der Ansprüche 1 bis 6 ausgeführt wird.

## Revendications

1. Procédé de commande de récupération d'énergie destiné à un véhicule hybride, dans lequel le procédé de commande de récupération d'énergie comprend :
le fait de déterminer si le véhicule respecte une condition d'activation permettant d'entrer dans un mode de marche en roue libre à grande vitesse prédéfini, (S100)
dans lequel le mode de marche en roue libre à grande vitesse est utilisé pour montrer une condition de fonctionnement dans laquelle la vitesse du véhicule est supérieure ou égale à un premier seuil de vitesse prédéfini et le conducteur n'a pas d'exigence évidente de freinage, dans lequel une exigence évidente de freinage est lorsque le véhicule est dans un état de grande vitesse, et que le conducteur ne freine pas, mais relâche seulement une pédale d'accélérateur ; et
la commande du véhicule pour mettre en oeuvre une opération d'annulation de récupération d'énergie lorsque le véhicule entre dans le mode de marche en roue libre à grande vitesse, (S200) dans lequel la condition d'activation est configurée pour comprendre ce qui suit :
la vitesse du véhicule est supérieure ou égale au premier seuil de vitesse ;
une ouverture de pédale d'accélérateur du véhicule est inférieure ou égale à un seuil d'ouverture prédéfini ;
une pédale de frein du véhicule est dans un état non enfoncé ; et
**caractérisé en ce que** la condition d'activation est configurée pour comprendre en outre :
un mécanisme de refroidissement du véhicule est dans un état où un moteur du véhicule ne doit pas nécessairement être maintenu en marche, c'est-à-dire lorsque le climatiseur compris dans le mécanisme de refroidissement n'est pas activé ou que la différence entre la température de consigne et la température ambiante après que le climatiseur est activé est inférieure à une température inférieure prédéfinie,
dans lequel la condition d'activation comprend en outre l'un quelconque ou plusieurs quelconques de ce qui suit :
le mode de conduite actuel du véhicule est un mode de conduite économique ; et
le véhicule n'a actuellement pas reçu d'instruction d'interdiction d'arrêt de moteur ou d'informations de défaillance de moteur pour le moteur du véhicule.

2. Procédé de commande de récupération d'énergie destiné à un véhicule selon la revendication 1, dans lequel la commande du véhicule pour mettre en oeuvre une opération d'annulation de récupération d'énergie comprend :
la commande d'un embrayage du véhicule pour s'ouvrir de sorte que le moteur du véhicule est désolidarisé d'un système d'entraînement du véhicule ; et
la commande du moteur du véhicule pour couper le carburant et s'arrêter.

3. Procédé de commande de récupération d'énergie destiné à un véhicule selon la revendication 1, dans lequel le procédé de commande de récupération d'énergie comprend en outre :
pour le véhicule dans le mode de marche en roue libre à grande vitesse, le fait de déterminer si le véhicule respecte une condition de sortie pour sortir du mode de marche en roue libre à grande vitesse ; (S300) et
la commande du véhicule pour mettre en oeuvre une opération de récupération d'énergie ou une opération de conduite normale lorsque le véhicule respecte la condition de sortie et sort du mode de marche en roue libre à grande vitesse (S400).

4. Procédé de commande de récupération d'énergie destiné à un véhicule selon la revendication 3, dans lequel la condition de sortie comprend l'une quelconque parmi ce qui suit :
une première condition de sortie, configurée pour comprendre : la vitesse du véhicule est inférieure à un second seuil de vitesse prédéfini, dans lequel le second seuil de vitesse est inférieur au premier seuil de vitesse ;
une deuxième condition de sortie, configurée pour comprendre : l'ouverture de pédale d'accélérateur du véhicule est inférieure ou égale au seuil d'ouverture prédéfini et la pédale de frein du véhicule est dans un état enfoncé ;
une troisième condition de sortie, configurée pour comprendre : l'ouverture de pédale d'accélérateur du véhicule est supérieure au seuil d'ouverture prédéfini et la pédale de frein du véhicule est dans l'état non enfoncé ;
une quatrième condition de sortie, configurée pour comprendre : la vitesse du véhicule est inférieure au second seuil de vitesse prédéfini, et l'ouverture de pédale d'accélérateur du véhicule est inférieure ou égale au seuil d'ouverture prédéfini et/ou la pédale de frein du véhicule est dans l'état non enfoncé, dans lequel le second seuil de vitesse est inférieur au premier seuil de vitesse ;
une cinquième condition de sortie, configurée pour comprendre : le véhicule a actuellement reçu l'instruction d'interdiction d'arrêt de moteur ou les informations de défaillance de moteur ; et une sixième condition de sortie, configurée pour comprendre : le mécanisme de refroidissement du véhicule est dans l'état où le moteur ne doit pas nécessairement être maintenu en marche.

5. Procédé de commande de récupération d'énergie destiné à un véhicule selon la revendication 4, dans lequel la commande du véhicule pour mettre en oeuvre une opération de récupération d'énergie ou une opération de conduite normale comprend :
la commande du véhicule pour mettre en oeuvre l'opération de récupération d'énergie lorsque le véhicule respecte la première condition de sortie et la deuxième condition de sortie ; et
la commande du véhicule pour mettre en oeuvre l'opération de conduite normale lorsque le véhicule respecte la troisième condition de sortie.

6. Procédé de commande de récupération d'énergie destiné à un véhicule selon la revendication 3, dans lequel le véhicule comprend un générateur de démarrage entraîné par courroie (BSG) et une unité de commande de véhicule hybride (HCU) ; et
la commande du véhicule pour mettre en oeuvre l'opération de récupération d'énergie comprend :
pour le véhicule avec le générateur de démarrage entraîné par courroie (BSG), le fait de demander au BSG de démarrer par le biais de l'unité de commande de véhicule hybride (HCU), la commande d'un régime moteur du véhicule pour qu'il augmente pour atteindre une plage de régime cible permettant d'implémenter une mise en prise d'embrayage, la commande du moteur pour qu'il soit dans un état de coupure de carburant pendant le processus d'augmentation de régime, et l'entrée dans le processus de récupération d'énergie du BSG après que la mise en prise d'embrayage est achevée ; et/ou
la commande du véhicule pour mettre en oeuvre l'opération de conduite normale comprend :
pour le véhicule avec le BSG, le fait de demander au BSG de démarrer par le biais de la HCU, le démarrage du moteur pour démarrer une injection de carburant, la commande du régime moteur pour qu'il augmente pour atteindre la plage de régime cible permettant d'implémenter une mise en prise d'embrayage, et l'entrée dans le processus de conduite normale du BSG après que la mise en prise d'embrayage est achevée.

7. Dispositif de commande de récupération d'énergie destiné à un véhicule hybride, dans lequel le dispositif de commande de récupération d'énergie comprend :
un ou plusieurs processeurs ; et
un dispositif de stockage permettant de stocker un ou plusieurs programmes,
dans lequel le ou les programmes, lorsqu'ils sont exécutés par le ou les processeurs, amènent le ou les processeurs à implémenter le procédé de commande de récupération d'énergie selon l'une quelconque des revendications 1 à 6.

8. Dispositif de commande de récupération d'énergie selon la revendication 7, dans lequel le dispositif de stockage est un support de stockage lisible par machine, stockant des instructions qui amènent une machine à exécuter le procédé de commande de récupération d'énergie selon l'une quelconque des revendications 1 à 6.

9. Dispositif de commande de récupération d'énergie selon la revendication 7 ou 8, dans lequel le ou les processeurs sont chacun un processeur destiné à l'exécution d'un programme, dans lequel lorsque le programme est exécuté, le procédé de commande de récupération d'énergie selon l'une quelconque des revendications 1 à 6 est exécuté.
